(19)

Europäisches
Patentamt
European
Patent Office
Office européen
des brevets

(11)     **EP 3 547 686 A1**

(12)     **EUROPEAN PATENT APPLICATION**

(43) Date of publication:
**02.10.2019 Bulletin 2019/40**

(21) Application number: **18305356.0**

(22) Date of filing: **29.03.2018**

(51) Int Cl.:
**H04N 19/154** *(2014.01)*     **H04N 19/176** *(2014.01)*
**H04N 19/105** *(2014.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, Delaware 19809 (US)**

(72) Inventors:
• **POIRIER, Tangi
35576 Cesson-Sévigné (FR)**
• **FRANCOIS, Edouard
35576 Cesson-Sévigné (FR)**
• **URBAN, Fabrice
35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54)     **METHOD AND APPARATUS FOR DECODER SIDE PREDICTION BASED ON WEIGHTED DISTORTION**

(57)     Decoders can use prediction based on weighted distortion to determine information used to make decisions regarding motion vectors, reference pixels, and coding modes, similar to a corresponding encoder operation. Samples in and around a current block and samples of reference pictures are weighted and a distortion metric generated to determine the decisions. Embodiments are described for prediction modes such as Cross-component linear model (CCLM), Local Illumination Compensation (LIC), and Frame Rate Up-Conversion (FRUC). Various embodiments describe derivation of weighting factors used in the decision making, comprising inference by a decoder, basing weighting factors on a quantization parameter, local activity of a block, and samples of temporally close reference pictures.

Figure 10

**Description**

FIELD OF THE INVENTION

The present principles relate to video compression and video decoding.

BACKGROUND OF THE INVENTION

The domain of the following embodiments is video coding, focused on decoding tools involving the computation of distortion. This for instance relates to Frame-Rate Up Conversion (FRUC), Pattern matched motion vector derivation (PMMVD), both based on Template Matching (TM) techniques, Cross-component linear model (CCLM), Local Illumination Compensation (LIC), and indirectly, Bi-directional Optical flow (BIO). These tools are described within the JVET (Joint Video Exploration Team) committee.

These tools make decoder decisions based on the computation of local distortion based on spatial or temporal reconstructed signal. This distortion is for example the Sum of Absolute Difference (SAD) between different prediction samples. This means that each sample has the same impact on the overall distortion.

However, it is well known that all the samples do not have the same perceptual impact. In encoder algorithms, it is therefore very common to introduce sample-dependent weighting values in the distortion computations involved in the encoding decisions.

The described embodiments propose to use such weighting distortions in the decoder, when the decoder makes use of such distortion computations for making its decisions.

SUMMARY OF THE INVENTION

These and other drawbacks and disadvantages of the prior art are addressed by the present principles, which are directed to a method and apparatus for decoder side prediction based on weighted distortion.

According to an aspect of the present principles, there is provided a method. The method comprises steps of: obtaining weighting factors related to video sequence samples; determining information that minimizes a distortion metric based on said video sequence samples with said weighting factors applied; and, decoding a current video block using the information.

According to another aspect of the present principles, there is provided a second method. The method comprises steps of: obtaining weighting factors related to video sequence samples; determining information that minimizes a distortion metric based on said video sequence samples with said weighting factors applied; and, encoding a current video block using the information.

According to another aspect of the present principles, there is provided an apparatus. The apparatus comprises a memory and a processor. The processor can be configured to encode or decode a block of a video image by obtaining weighting factors related to video sequence samples, determining information that minimizes a distortion metric based on the video sequence samples with the weighting factors applied; and, encoding or decoding the current video block using the information.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 shows locations of samples used for the derivation of the CCLM parameters.
Figure 2 shows neighboring samples used for deriving IC parameters.
Figure 3 shows in bi-prediction, the L-shapes in references 0 and 1 are compared to the current block L-shape to derive the IC parameters.
Figure 4 shows neighboring blocks used in the SAD calculations for Template cost function.
Figure 5 shows neighboring blocks used in the SAD calculation for Bilateral cost function.

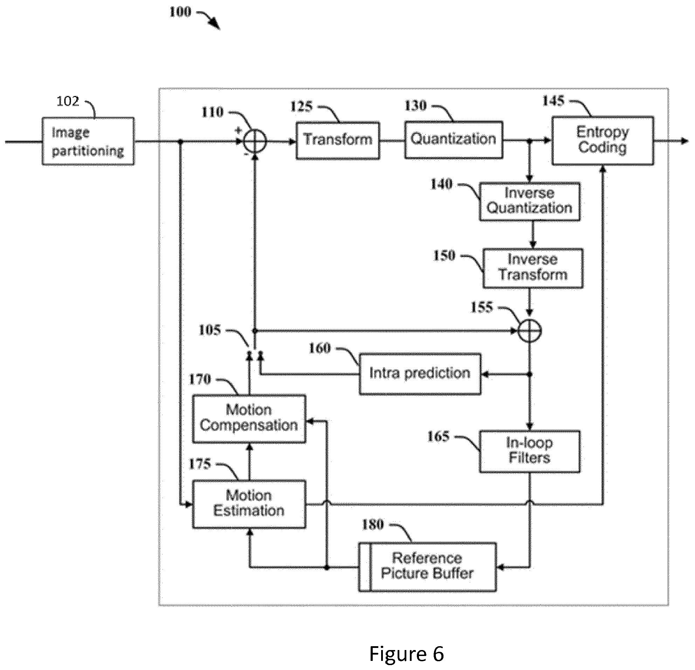

Figure 6 shows a standard, generic video compression scheme.

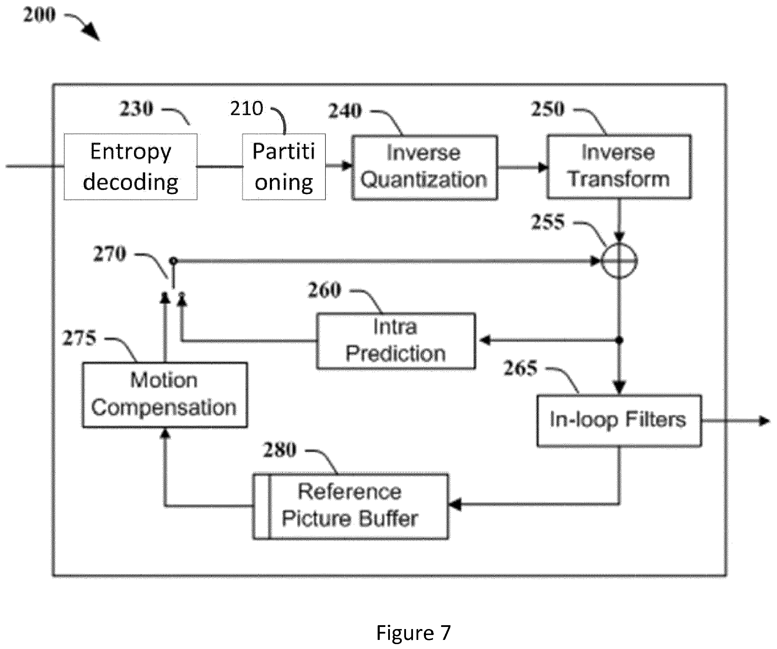

Figure 7 shows a standard, generic video decompression scheme.
Figure 8 shows a flow diagram for one embodiment of the described approach.
Figure 9 shows locations of the samples used for the derivation of the CCLM parameters.
Figure 10 shows computation of the weighting factor from a reference block.

Figure 11 shows an example of temporal coding hierarchy.
Figure 12 shows one embodiment of a method using the described aspects.
Figure 13 shows another embodiment of a method using the described aspects.
Figure 14 shows one embodiment of an apparatus using the described aspects.

DETAILED DESCRIPTION

The described embodiments propose to use such weighting distortions in the decoder, when the decoder makes use of such distortion computations for making its decisions. By applying weighting while computing the distortion in the decoder, one advantage of these ideas is to obtain improved coding performance.

Cross-component linear model (CCLM) prediction mode is conceptually close to the LIC (Local Illumination Compensation) mode, but it applies internally to a picture, across color components. Samples from a given color component are predicted from samples from another color component, based on the L-shape of decoded pixels surrounding the current block.

Typically, this applies to predict the chroma samples from the luma samples. A linear model is used as in LIC:

$$\mathrm{pred}_C(i,j) = a \cdot \mathrm{rec}_L{}'(i,j) + b$$

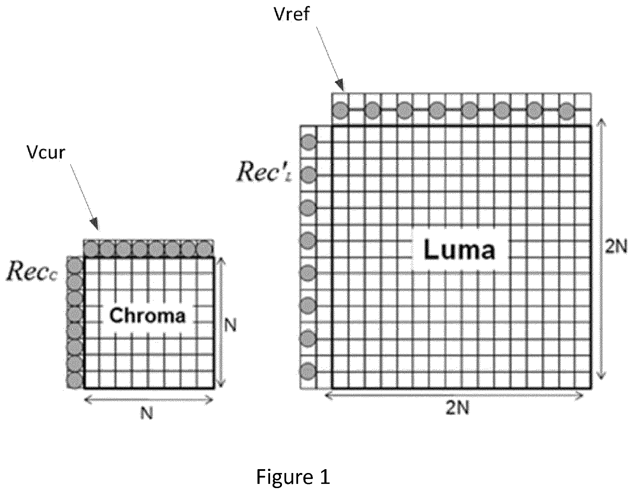

where predc represents the prediction chroma samples, and rec$_L$' represents the reconstructed luma samples. The parameters a and b are derived based on the already available luma samples and chroma samples from the L-shape surrounding the current luma block (Vref neighborhood) and the current chroma block (Vcur neighborhood), as depicted in Figure 1. As in LIC, the considered distortion is the Mean Square Error (MSE).
CCLM is therefore based on the computation of a local distortion, defined as follows:

$$\mathrm{dist} = \sum_{r \in \mathrm{Vcur}, s \in \mathrm{Vref}} (\mathrm{rec}_C(r) - a.\,\mathrm{rec}_L(s) - b)^2$$

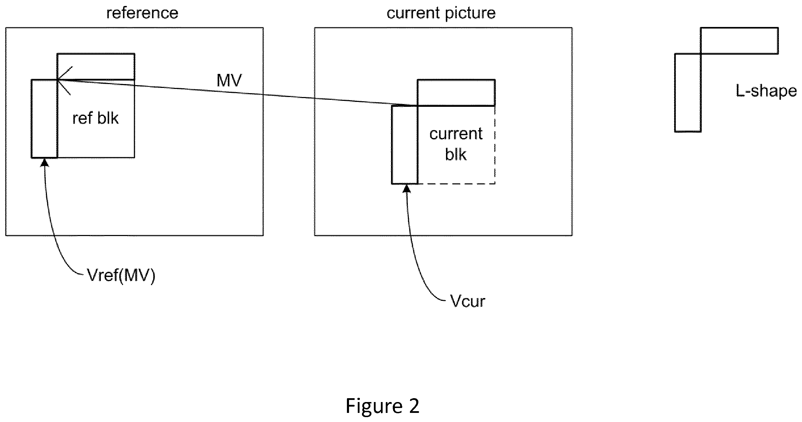

In Inter mode, LIC allows correcting block prediction samples obtained via Motion Compensation (MC) by considering the spatial or temporal local illumination variation possibly. The LIC parameters are estimated by comparing a set of reconstructed samples rec_cur surrounding the current block ("current blk"), located in a neighborhood Vcur, with a set of reconstructed samples rec_ref, located in a neighborhood Vref(MV) of the displaced block in the reference picture ("ref blk"), as depicted in Figure 2. Here, MV is the motion displacement between the current block and the reference block. Typically, Vcur and Vref(MV) are made of the L-shape samples, neighboring the current block and reference block, respectively.

The LIC parameters minimize the mean square error difference (MSE) between the samples in Vcur and the samples in Vref(MV), corrected with IC parameters. Typically, the LIC model is linear: LIC(x) = a.x+b = (a)(x)+b.

$$(a_i, b_i) = \underset{(a,b)}{\mathrm{argmin}} \left( \sum_{r \in \mathrm{Vcur}, s \in \mathrm{Vref}(\mathrm{MV})} (\mathrm{rec\_cur}(r) - a.\,\mathrm{rec\_ref}(s) - b)^2 \right)$$

s and r are corresponding pixel locations, respectively in Vcur and in Vref(MV).

In the following, pixel location will be noted either by 1 (e.g. s or r) or 2 variables (e.g. (x,y) or (i,j)).

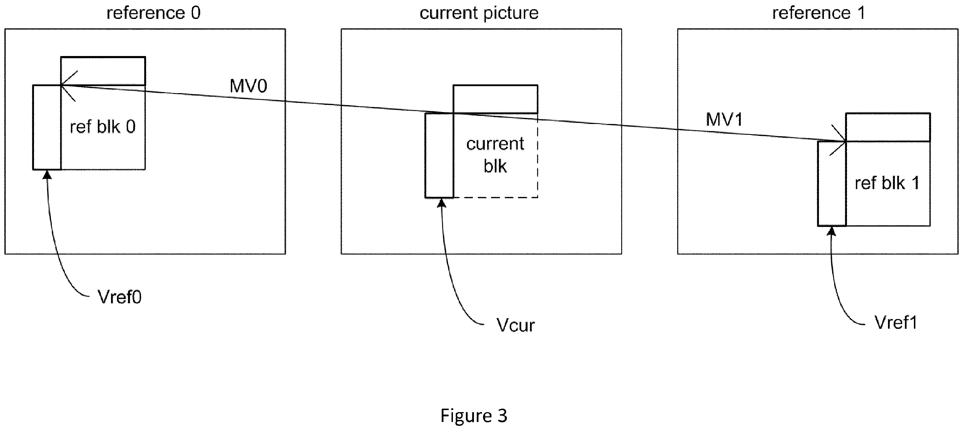

In case of Bi-prediction, the LIC parameters (ao,bo) and $(a_1,b_1)$ are derived independently from Vref0(MV0) and from Vref1 (MV1) respectively (Figure 3).

LIC is therefore based on the computation of a local distortion, defined as follows:

$$\mathrm{dist} = \sum_{r \in \mathrm{Vcur}, s \in \mathrm{Vref}} (\mathrm{rec\_cur}(r) - a.\,\mathrm{rec\_ref}(s) - b)^2$$

Decoder-side motion derivation (DMVD) is an inter-prediction tool based on the derivation, at decoder side, of a motion vector based on a distortion-based motion estimation process. DMVD consists in deriving a motion vector, based on distortion function, applied to already reconstructed samples. This kind of function calculates a cost between a reference and a candidate as the Sum of Absolute Differences (SAD) between two blocks of pixels.

The reference is defined with some neighboring blocks (or CU, PU...) of the current block (or CU, PU...) to be encoded/decoded. The objective is to find the motion vector predictor that minimizes the SAD between the reference blocks (or CU, PU...) and the neighboring blocks (or CU, PU...) of the block pointed by the tested motion vector predictor in the tested reference picture

Two tools in JVET are currently using this technique, Frame-Rate Up Conversion (FRUC) and Pattern matched motion vector derivation (PMMVD).

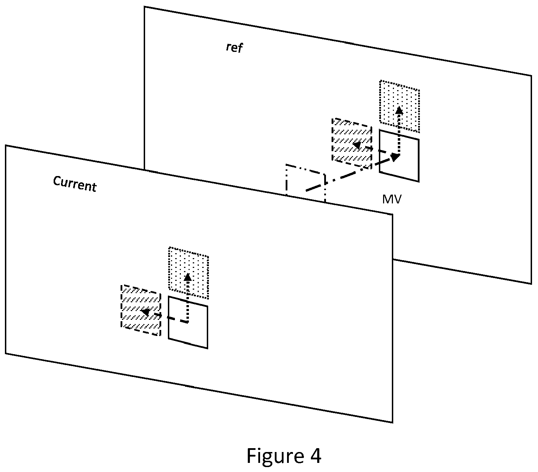

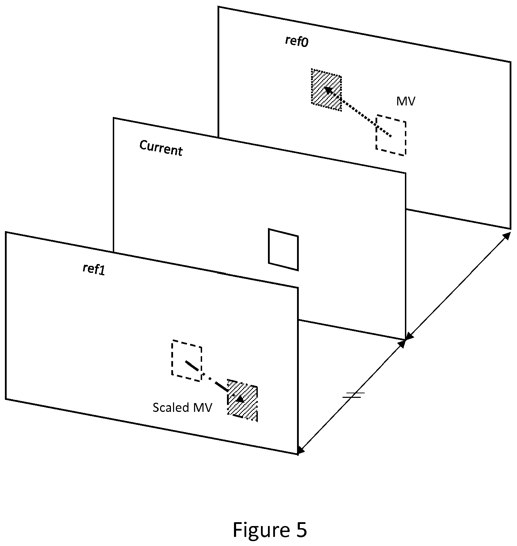

FRUC uses two different template matching cost functions called: Template and Bilateral, illustrated respectively in the following Figure 4 and Figure 5. FRUC Bilateral mode is based a similar design as PMMVD.

In FRUC Template mode, the template matching cost is the sum of the SADs between blocks of the current picture, neighboring the current block, and blocks of the reference picture (typically, as shown in Figure 4, dotted blocks (if available) and dashed blocks (if available)). Let's note the current block top-left position is p=(xc,yc), and the tested motion vector MV=(dx,dy).

The SAD is computed as follows:

$$SAD = \sum_{r \in Vcur, s \in Vref(MV)} |rec\_cur(r) - rec\_ref(s)|$$

where |t| is the absolute value of the variable t, Vcur is made of the neighboring dotted blocks (if available) and dashed blocks (if available) of the current block, and Vref(MV) is made of the neighboring dotted blocks (if available) and dashed blocks (if available) of the reference block located at position (xc+dx,yc+dy) in the reference picture.

As in previous case, s and r are corresponding pixel locations, respectively in Vcur and in Vref(MV).

In FRUC Bilateral mode, as well as in PMMVD, the template matching cost is the SAD between blocks of two different reference pictures (typically, as shown in Figure 5, dashed blocks (if available)). If the current block top-left position is (xc,yc), the tested motion vector MV=(dx,dy), the SAD is computed as follows:

$$SAD = \sum_{p \in Vref0(MV), s \in Vref1(\lambda.MV)} |rec\_ref0(p) - rec\_ref1(s)|$$

where Vref0(MV) is made of the reference block located at position (xc+dx,yc+dy) in the reference picture 0, and Vref1($\lambda$.MV) is made of the reference block located at position (xc+$\lambda$.dx,yc+$\lambda$.dy) in the reference picture 1, $\lambda$ being a scaling factor taking into account the temporal distance between the picture ref1 and the current picture, relatively to the temporal distance between the picture ref0 and the current picture. Typically, $\lambda$ = (tref1 - tcur)/(tref0 - tcur), where tcur, tref0 and tref1 are the temporal instances of the current, reference 0 and reference 1 pictures.

The distortion used in common decoder-side computations gives the same weight to all samples. However, it is common to use weighting factors when such distortion is computed in the encoder, for instance, to take into account the perceptual impact of the samples.

At least one JVET approach uses a weight per block, computed on the luma signal, based on the local gradients inside the block. Blocks having a high activity (that is, local gradients with high amplitude) are given a lower weight than blocks with low activity.

Another weighting proposed within the JVET committee is for HDR content. The weighting is dependent on the luma value of the sample.

The application of appropriate weighting at the encoder side generally results in noticeable gain in visual quality (for a same bitrate), by better allocating the bits among the various areas of the pictures. However, this weighting is not applied at the decoder.

The described embodiments address this problem. The following paragraphs present exemplary embodiments, such as for computing CCLM or LIC parameters at an encoder or decoder side. Choosing the right transformation to apply to reference pixels based on the reconstructed or decoded neighborhood changes the prediction. The described embodiments also present encoder and decoder-side motion vector refinement on FRUC, FRUC bilateral and PMMVD modes. In these cases, choosing the right reference pixels based on the decoded neighborhood changes the reference. But the approaches described could also be generalized to encoder and decoder-side prediction-mode or motion vector selection. In the embodiments, distortions can be compared to determine the coding mode, reference pixels, or motion vector, etc.

In the prior-art, weighting can be applied in DMVD approaches for weighting the samples coming from different pictures, such as in a prior approach dealing with weighted averaging of multiple predictors. But such approaches do not take into account a local importance (weighting) of the samples.

The described embodiments relate to the decision process applied at the decoder side (and also, for symmetric reasons, at the encoder), for making decisions based on the direct (as in FRUC) or indirect (as in LIC) computation of distortions.

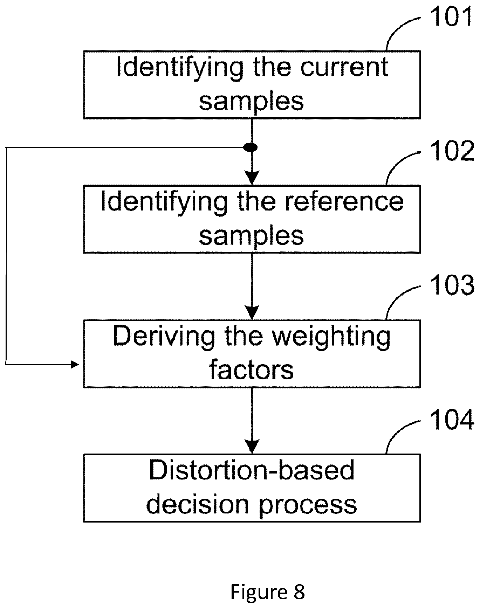

The basic concept of the described embodiments is depicted in Figure 8. The decision process is made of four steps. In a first step (101) the current samples neighborhood, Vcur, that is going to be used for deriving the distortions, is identified. Similarly, in another step (102) the reference samples neighborhood, Vref, that is going to be used for deriving the distortions, is identified. Step (103) derives the weighting factors W(s), s in Vcur, to be applied for each sample used in the distortion computation. This step uses as input data the output of step 101 (the current samples), and possibly the output of step 102 (the reference samples). The last step (104) corresponds to the actual decision process, based on the computation of distortions that uses as input, the current samples, the reference samples, and the weighting factors.

The weighted distortion can be determined from current reconstructed or decoded samples, as well as from reference samples, and is minimized by varying parameters. These parameters can be the reference samples, coding mode, motion vector, or other parameters affecting the distortion. In at least one embodiment described below, parameters within the distortion determination can be varied to minimize the weighted distortion.

In a first embodiment, applied to CCLM, the described embodiment works as follows. The goal is to predict the color samples of the current block, from the spatially neighboring color samples, and from co-located neighboring color samples from another color component. For example, it applies to predict the chroma samples of a block from the co-located luma samples block.

- In step 101, the color samples in the L-shape of the current block, Vcur, are identified. This corresponds to the set Vcur indicated in Figure 1.
- In step 102, the color samples in the L-shape of the co-located block from the component used to predict the current block, Vref, are identified. This corresponds to the set Vref indicated in Figure 1.
- In step 103, the weighting factors W(r) to be applied are computed.
- In step 104, the distortion for parameters a,b is computed as follows:

$$\mathrm{dist} = \sum_{r \in Vcur, s \in Vref} W(r).\left(\mathrm{rec\_cur}(r) - a.\,\mathrm{rec\_ref}(s) - b\right)^2$$

a and b are computed to minimize this weighted distortion.

A normalization factor may be applied as follows:

$$\mathrm{dist} = \sum_{r \in Vcur, s \in Vref} W(r).\left(\mathrm{rec\_cur}(r) - a.\,\mathrm{rec\_ref}(s) - b\right)^2 \Big/ \sum_{r \in Vcur} W(r)$$

In a second embodiment, applied to CCLM, the described embodiment works as follows. The goal is to predict the samples of the current block, located at position (xc,yc), from the spatially neighboring samples, and from samples located in a reference picture. A motion vector MV(dx,dy) is given. The reference block is therefore located at position (xc+dx,yc+dy).

- In step 101, the samples in the L-shape of the current block, Vcur, are identified. This corresponds to the set Vcur indicated in Figure 2.
- In step 102, the color samples in the L-shape of the reference block, Vref(MV), are identified. This corresponds to the set Vref(MV) indicated in Figure 2.
- In step 103, the weighting factors W(r) to be applied are computed.
- In step 104, the distortion for parameters a,b is computed as follows:

$$dist = \sum_{r \in Vcur, s \in Vref(MV)} W(r).(rec\_cur(r) - a.rec\_ref(s) - b)^2$$

a and b are computed to minimize this weighted distortion.

A normalization factor may be applied as follows:

$$dist = \sum_{r \in Vcur, s \in Vref(MV)} W(r).(rec\_cur(r) - a.rec\_ref(s) - b)^2 / \sum_{r \in Vcur} W(r)$$

In a third embodiment, applied to FRUC template mode, the described embodiment works as follows. The goal is to identify the best motion vector MV(dx,dy), using the spatially neighboring samples of the current block, located at position (xc,yc), and the spatially neighboring samples of the reference block identified by the motion vector MV. The reference block is therefore located at position (xc+dx,yc+dy).

- In step 101, the samples in the L-shape of the current block, Vcur, are identified. This corresponds to the dotted blocks (if available) and dashed blocks (if available) of the current picture in Figure 4.

- In step 102, the samples in the L-shape of the reference block, Vref(MV), are identified. This corresponds to the dotted blocks (if available) and dashed blocks (if available) of the reference picture in Figure 4.
- In step 103, the weighting factors W(r) to be applied are computed.
- In step 104, the distortion for motion vector MV is computed as follows:

$$dist = \sum_{r \in Vcur, s \in Vref(MV)} W(r).|rec\_cur(r) - rec\_ref(s)|$$

MV is computed to minimize the distortion.
A normalization factor may be applied as follows:

$$dist = \sum_{r \in Vcur, s \in Vref(MV)} W(r).|rec\_cur(r) - rec\_ref(s)| / \sum_{r \in Vcur} W(r)$$

In a fourth embodiment, applied to FRUC bilateral and PMMVD, the described embodiment works as follows. The goal is to identify the best motion vector MV(dx,dy), using two reference blocks, located in two reference pictures. The current block is considered to be located at position (xc,yc). The reference blocks are derived from the position (xc, yc) and from the motion vector MV.

- In step 101, the samples in the current block, Vcur, are identified.
- In step 102, the samples in the reference block from reference picture 0, Vref0(MV), are identified. Similarly, the samples in the reference block from reference picture 1, Vref1(.MV).
- In step 103, the weighting factors W(r) to be applied are computed.
- In step 104, the distortion for motion vector MV is computed as follows:

$$dist = \sum_{r \in Vcur, p \in Vref0(MV), s \in Vref1(\lambda.MV)} W(r).|rec\_ref0(p) - rec\_ref1(s)|$$

MV is computed to minimize the distortion.
A normalization factor may be applied as follows:

$$dist = \sum_{r\in Vcur, p\in Vref0(MV), s\in Vref1(\lambda.MV)} W(r).|rec\_ref0(p) - rec\_ref1(s)| / \sum_{p\in Vcur} W(r)$$

In the equations above, the weighting factor can be computed from the current neighborhood, from a reference, or from a combination of those. The distortion to minimize can be computed as follows:

$$dist = \frac{\sum_{r\in Vcur, p\in Vref0, s\in Vref1} W(p, r, s).d(p, r, s)}{\sum_{r\in Vcur, p\in Vref0, s\in Vref1} W(p, r, s)}$$

where $W(p,r,s)$ is the weighting factor computed from neighborhoods, and $d(p,r,s)$ is the distortion computed from the neighborhood points $(p,r,s)$.

In a first embodiment used in derivation of weighting factors, a first method is employed. In this embodiment, a weight function $F(.)$ is inferred by the decoder, or signaled in the bitstream.

The weighting factor for a sample located at position r is derived as follows:

$$W(r) = F(rec\_cur(r))$$

That is, the weighted factor only depends on the value of the sample from the current picture located at the position r.

In an embodiment, the weighted factor only depends on the value of the luma sample from the current picture located at the position r, even if the distortion computation applies to the chroma samples.

$$W(r) = F(rec\_curY(r))$$

The weight function $F(.)$ can be implemented with:

- look-up-tables,
- piece-wise scalar functions,
- piece-wise linear functions,
- piece-wise polynomial functions.

It can be coded in SEI message, in Sequence Parameter Sets (SPS), Picture Parameter Sets (PPS), in slice header, in Coding Tree Unit (CTU) syntax, per Tile, or in new structure such as Adaptation Picture Sets (APS).

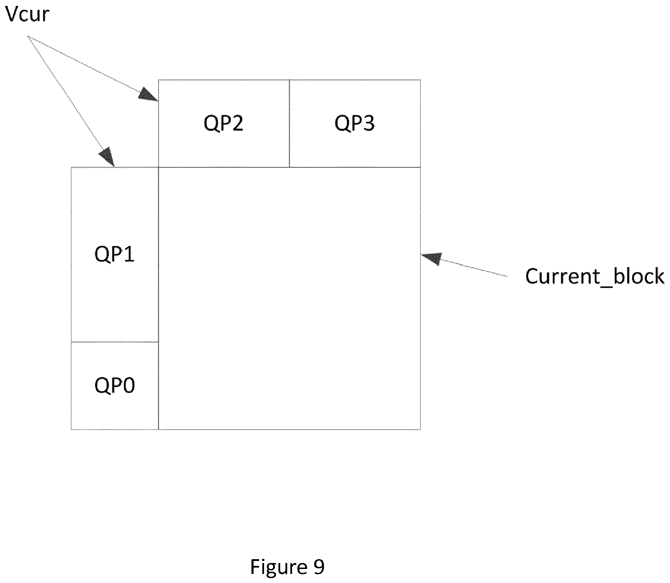

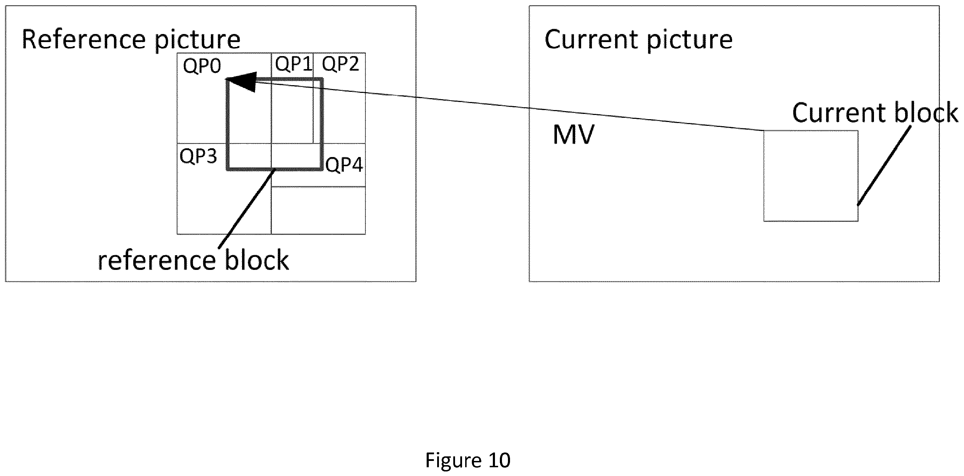

In a second embodiment employing a second method for computing weighting factors, the weighting factors are based on the QP used to code the samples. This is illustrated in Figure 9 for spatial prediction, where the current block is surrounded by samples (Vcur) belonging to 4 different blocks, coded with 4 different QPs, QP0 to 3. For the temporal case, the weight can be computed from any of the references (ref0 or ref1 if available) or the current picture. Figure 10 illustrates a reference block in a reference picture, where the reference block is made of samples from different blocks in the reference picture, with potentially different QPs. The weighting factor for a sample located at position s, is computed from the QPi used for coding the block to which this sample belongs. We noted QP(s) this QP. Here, four different weighting factors should therefore be used.

In an embodiment, $W(s)$ is proportional to $2^{(-QP(s)/3)}$.

$$W(s) = K. \, 2^{(-QP(s)/3)}$$

K being a constant parameter.

In a third embodiment, a third method of deriving the weighting parameters is used. The weighting factor for a sample position is based on the local activity of the block containing the sample. The local activity locAct in a block *B* can be for instance computed as follows:

$$locAct(B) = \sum_{(x,y) \in B} |h(x,y)| / N$$

where N is the number of samples of block *B*, and h(x,y) can be defined as:

$$h(x,y) = 4.\,rec(x,y) - rec(x+1,y) - rec(x,y+1) - rec(x-1,y) - rec(x,y-1)$$

*rec(x,y)* being the value of the reconstructed sample at position (x,y). If s=(x,y) belongs to block *B*, W(s) = locAct(B)
In a variant, we consider for each position s a block *Bs* centered on the position s, and W(s) = locAct(Bs). The typical size of B is 8x8.

In the case of bilateral motion derivation, the samples from the current block Vcur cannot be used to derive the weighting factors, since they are not yet reconstructed.

In one embodiment of bilateral motion derivation, the weighting factors are computed using the samples of the temporally closest reference picture, among the different considered reference pictures (reference 0 and reference 1).

In another embodiment of bilateral motion derivation, the weighting factors are computed using the samples of the reference picture whose temporal level in the temporal coding hierarchy is the lowest among the different considered reference pictures (reference 0 and reference 1).

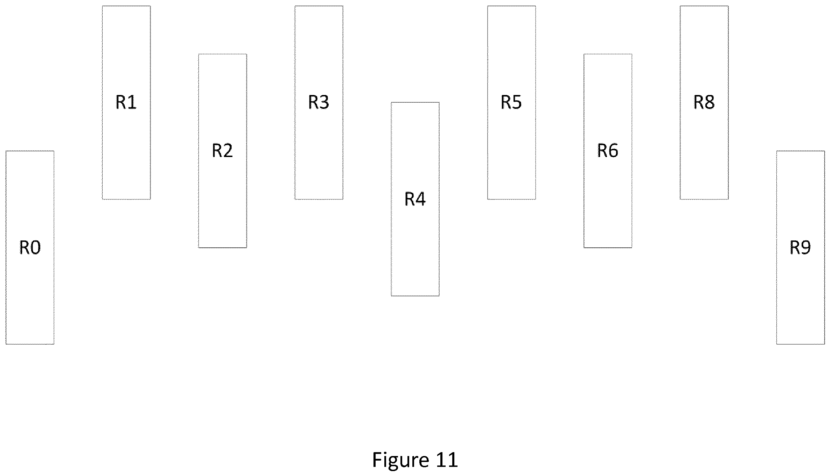

For instance, referring to Figure 11, let's consider that the current block uses as reference pictures picture R0 and R3. In this embodiment, the weighting factors should be computed based on the samples located in picture R0, which is at a lower temporal hierarchy than the picture R4.

In another embodiment, the weighting factors are computed using the samples from both reference pictures used to derive the motion vector. For example, the following policy can be used:

-  Weighting factors W0(p) are computed for each location p inside Vref0(MV), using any of the solutions mentioned above. A normalization over the block can also be applied.
-  Weighting factors W1(s) are computed for each location s inside Vref1( .MV), using any of the solutions mentioned above. A normalization over the block can also be applied.
-  The final weighting factor for a position p is computed as:

$$W(p,s) = \big(a.\,W0(p) + (1-a).\,W1(s)\big)$$

where a <= 1 is a given parameter (for instance be set equal to).

In another embodiment, the weighting factors are computed using the samples of the reference picture, for which the average QP is the lowest. The average QP is for example computed as follows. Let (xc,yc) be the location of the current block in the current picture. Let MV(dx,dy) be the motion vector associated to a reference picture. The block in the reference picture is located at (xc+dx,yc+dy). The average QP in the reference block is the average of the QPs used of the samples of the reference block. An illustration is given in Figure 10, where the reference block is made of samples belonging to different blocks, coded with potentially different QPs.

The average QP ($\overline{QP}$) is computed as:

$$\overline{QP} = \frac{1}{N} \sum_{s \in Vref} QP(s),$$

with N the number of samples in Vref, and QP(s) the QP of the block where sample s is located.

The purpose of the described embodiments is to get a more accurate distortion measure in the decoder-side refinement phase.

The foregoing paragraphs have presented exemplary embodiments, such as for: a) computing CCLM or LIC parameters at a decoder side (choosing the right transformation to apply to reference pixels based on the decoded neighborhood - changes the prediction), and b) Decoder-side motion vector refinement on FRUC, FRUC bilateral and PMMVD modes (choosing the right reference pixels based on the decoded neighborhood - changes the reference). But it could also be generalized to decoder-side prediction-mode or motion vector selection. When appropriate, corresponding encoder side operations would also be part of the disclosed ideas presented here.

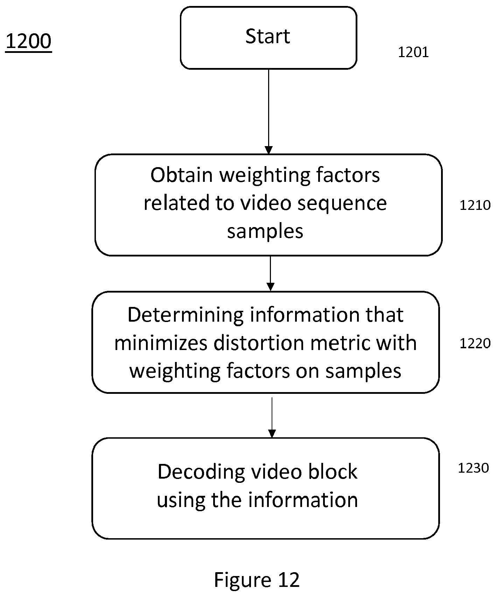

One embodiment of the aspects described is illustrated in Figure 12, which shows one embodiment of a method 1200 for decoder side prediction based on weighted distortion. The method commences at Start block 1201 and proceeds to block 1210 for obtaining weighting factors related to video sequence samples. Control proceeds from block 1210 to block 1220 for determining information that minimizes a distortion metric with weighting factors applied to video sequence samples. Such information can comprise reference samples, motion vectors, or coding mode to use in the next step. Control then proceeds from block 1220 to block 1230 for decoding the video block using the determined information.

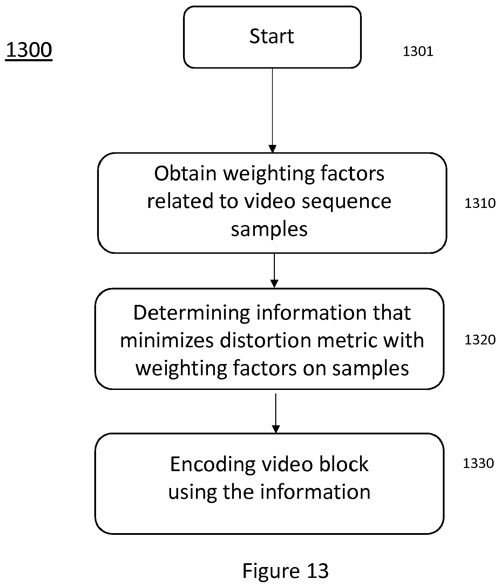

Another embodiment of the aspects described is illustrated in Figure 13, which shows one embodiment of a method 1300 for encoder side prediction based on weighted distortion. The method commences at Start block 1301 and proceeds to block 1310 for obtaining weighting factors related to video sequence samples. Control proceeds from block 1310 to block 1320 for determining information that minimizes a distortion metric with weighting factors applied to video sequence samples. Such information can comprise reference samples, motion vectors, or coding mode to use in the next step. Control then proceeds from block 1320 to block 1330 for encoding the video block using the determined information.

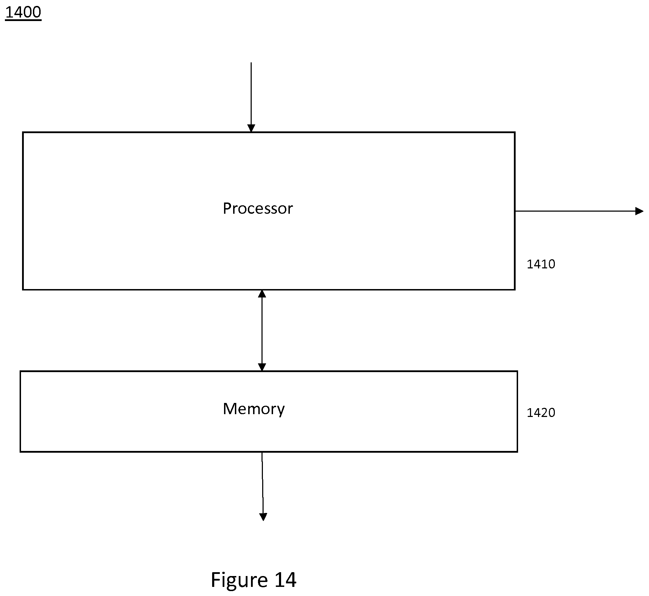

One embodiment of the aspects described is illustrated in Figure 14, which shows an apparatus 1400 used for prediction based on weighted distortion. The apparatus comprises a Processor 1410 and a Memory 1420. The Processor 1410 is configured, for encoding, to perform the steps of Figure 13, that is performing encoding using prediction based on weighted distortion for a portion of a video image using the method of Figure 13.

When Processor 1410 is configured for decoding, it performs the steps of Figure 12, that is, performing prediction based on weighted distortion for a portion of a video image using the method of Figure 12.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

**Claims**

1. A method, comprising:

   obtaining weighting factors related to video sequence samples;
   determining information that minimizes a distortion metric, based on said video sequence samples, with said weighting factors applied; and,
   decoding a current video block using said information.

2. An apparatus for decoding a block of image data, comprising:

   a memory, and
   a processor, configured to:

   obtain weighting factors related to video sequence samples;
   determine information that minimizes a distortion metric, based on said video sequence samples, with said weighting factors applied; and,
   decode a current video block using said information.

3. A method, comprising:

   obtaining weighting factors related to video sequence samples;
   determining information that minimizes a distortion metric, based on said video sequence samples, with said weighting factors applied; and,
   encoding a current video block using said information.

4. An apparatus for decoding a block of image data, comprising:

   a memory, and
   a processor, configured to:

   obtain weighting factors related to video sequence samples;
   determine information that minimizes a distortion metric, based on said video sequence samples, with said weighting factors applied; and,
   encode a current video block using said information.

5. The method of Claim 1 or 3 or the apparatus of Claim 2 or 4, wherein said video sequence samples comprise at least one of a neighboring region of a current video block and at least one reference picture.

6. The method of Claim 1 or 3 or the apparatus of Claim 2 or 4, wherein said information comprises reference samples or at least one motion vector.

7. The method of Claim 1 or 3 or the apparatus of Claim 2 or 4, wherein the distortion metric is computed for chroma samples.

8. The method of Claim 1 or 3 or the apparatus of Claim 2 or 4, wherein said weighting factors are based on a function of said video sequence samples.

9. The method of Claim 1 or 3 or the apparatus of Claim 2 or 4, wherein said weighting factors are based on a quantization parameter used to code said video sequence samples.

10. The method of Claim 1 or 3 or the apparatus of Claim 2 or 4, wherein said weighting factors are based on local activity of said current video block.

11. The method of Claim 1 or 3 or the apparatus of Claim 2 or 4, wherein said information is used to determine a coding mode for the current video block.

12. The method of Claim 1 or 3 or the apparatus of Claim 2 or 4, wherein information is used to determine samples to use as references for the current video block.

13. A non-transitory computer readable medium containing data content generated according to the method of any one of claims 3 and 5 to 12, or by the apparatus of any one of claims 4 and 5 to 12, for playback using a processor.

14. A signal comprising video data generated according to the method of any one of claims 3 and 5 to 12, or by the apparatus of any one of claims 4 and 5 to 12, for playback using a processor.

15. A computer program product comprising instructions which, when the program is executed by a computer, cause the computer to carry out the method of any one of claims 1 and 5 to 12.

Figure 1

L-shape

current picture

current blk

Vcur

reference

MV

ref blk

Vref(MV)

Figure 2

reference 0

current picture

reference 1

MV0

MV1

ref blk 0

current blk

ref blk 1

Vref0

Vcur

Vref1

Figure 3

EP 3 547 686 A1

Figure 4

Figure 5

Figure 6

Figure 7

Figure 8

EP 3 547 686 A1

Figure 9

Figure 10

21

Figure 11

1200

Start 1201

↓

Obtain weighting factors
related to video sequence
samples 1210

↓

Determining information that
minimizes distortion metric with
weighting factors on samples 1220

↓

Decoding video block
using the information 1230

Figure 12

**1300**

```
            ┌─────────────┐
            │    Start     │  1301
            └──────┬──────┘
                   │
                   ▼
      ┌────────────────────────┐
      │  Obtain weighting factors │  1310
      │  related to video sequence │
      │        samples           │
      └────────────┬───────────┘
                   │
                   ▼
      ┌────────────────────────┐
      │ Determining information that │  1320
      │ minimizes distortion metric with │
      │  weighting factors on samples │
      └────────────┬───────────┘
                   │
                   ▼
      ┌────────────────────────┐
      │   Encoding video block    │  1330
      │   using the information   │
      └────────────────────────┘
```

Figure 13

1400

Processor

1410

Memory

1420

Figure 14

Europäisches
Patentamt

European
Patent Office

Office européen
des brevets

# EUROPEAN SEARCH REPORT

**Application Number**

EP 18 30 5356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/123133 A1 (ERICSSON TELEFON AB L M [SE]) 20 July 2017 (2017-07-20) * paragraphs [0051], [0083], [0095], [0108], [0111]; figure 5 * | 1-9, 11-15 | INV. H04N19/154 H04N19/176 H04N19/105 |
| X | PERCEPTUALLY OPTIMIZED QP ADAPTATION AND ASSOCIATED DISTORTION MEASURE: "Perceptually optimized QP adaptation and associated distortion measure", 8. JVET MEETING; 18-10-2017 - 25-10-2017; MACAU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-H0047, 10 October 2017 (2017-10-10), XP030151035, * page 1 - page 10 * | 1-4,8, 10,11,15 | |
| X | EP 1 521 477 A1 (THOMSON LICENSING SA [FR]) 6 April 2005 (2005-04-06) * paragraphs [0004], [0010], [0023], [0028], [0033]; figure 2 * | 1-8,15 | |
| X | FRANCOIS E ET AL: "AHG7: Comments on metrics for extended colour volume content", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F0089, 31 March 2017 (2017-03-31) , XP030150764, * page 1 - page 2 * | 1-4,9,15 | **TECHNICAL FIELDS SEARCHED (IPC)** H04N |

The present search report has been drawn up for all claims

| Place of search | Date of completion of the search | Examiner |
|---|---|---|
| Munich | 12 June 2018 | Seeger, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5356

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2018

| Patent document cited in search report | | | Publication date | Patent family member(s) | | | Publication date |
|---|---|---|---|---|---|---|---|
| WO 2017123133 | A1 | | 20-07-2017 | AR | 107349 | A1 | 18-04-2018 |
| | | | | WO | 2017123133 | A1 | 20-07-2017 |
| EP 1521477 | A1 | | 06-04-2005 | CN | 1604653 | A | 06-04-2005 |
| | | | | EP | 1521477 | A1 | 06-04-2005 |
| | | | | FR | 2860678 | A1 | 08-04-2005 |
| | | | | JP | 4688462 | B2 | 25-05-2011 |
| | | | | JP | 2005110289 | A | 21-04-2005 |
| | | | | KR | 20050032478 | A | 07-04-2005 |
| | | | | MY | 145181 | A | 30-12-2011 |
| | | | | TW | I344276 | B | 21-06-2011 |
| | | | | US | 2005213828 | A1 | 29-09-2005 |

EPO FORM P0459

For more details about this annex : see Official Journal of the European Patent Office, No. 12/82